# EUROPEAN PATENT SPECIFICATION

(11) **EP 4 440 117 B1**
(45) Date of publication and mention of the grant of the patent: **18.11.2026**
(21) Application number: 23794982.1
(22) Date of filing: 07.04.2023
(51) Int. Cl.: G06F 3/0483, G06F 3/04886, H04N 21/431, H04N 21/854

(54) **VIDEO PROCESSING METHOD AND APPARATUS, DEVICE, AND STORAGE MEDIUM**
VIDEOVERARBEITUNGSVERFAHREN UND -VORRICHTUNG, VORRICHTUNG UND SPEICHERMEDIUM
PROCÉDÉ ET APPAREIL DE TRAITEMENT VIDÉO, DISPOSITIF, ET SUPPORT DE STOCKAGE

(30) Priority: 28.04.2022 CN 202210470742
(43) Date of publication of application: 02.10.2024
(73) Proprietor: Beijing Zitiao Network Technology Co., Ltd., Beijing 100190 (CN)
(72) Inventor: HAN, Mengyuan, Beijing 100028 (CN); GUO, Haiyang, Beijing 100028 (CN); REN, Pingyuan, Beijing 100028 (CN); SHEN, Liangying, Beijing 100028 (CN)
(74) Representative: Marks & Clerk LLP
(86) International application number: PCT/CN2023/086803
(87) International publication number: WO 2023/207549

(56) References cited:
- CN-A- 108 769 814
- CN-A- 111 669 639
- CN-A- 112 153 288
- CN-A- 113 132 808
- CN-A- 113 132 808
- CN-A- 113 473 204
- CN-A- 114 116 053
- CN-A- 114 339 076
- GB-A- 2 547 538
- US-A1- 2009 210 790
- US-A1- 2020 234 483

## Description

### CROSS-REFERENCE TO RELATED APPLICATIONS

### TECHNICAL FIELD

The present disclosure relates to the field of data processing, in particular to a video processing method and apparatus, a device and a storage medium.

### BACKGROUND

With a popularization of smart equipment and a development of information technology, various short video platforms have emerged, and the short video platforms continuously launch series of activities with diversified themes to attract more users to participate.

In some related technologies, detailed information of different activities is displayed on different independent activity pages. During a process of watching a short video, if a user wants to participate in a related activity, a current video playing page has to jump to an activity page corresponding to the activity to enable the user to learn details of the activity. Only based on the activity page, participation in the activity can be achieved.

CN112153288A relates to a method and device for publishing a video or an image, equipment and a medium. In one example method, the method comprises : presenting a photographing interface including photographing a user interface element; in response to detecting activation of the photographing user interface element in the photographing interface, generating a photographed video or image, and displaying an editing interface for editing the photographed video or image, the editing interface including a publishing user interface element for publishing the photographed video or image; in response to detecting activation of the publication user interface element, publishing the captured video or image. Through a snapshot or one-key release function, a user can quickly releasea shot video, thereby facilitating improvement of enthusiasm of the user for participating in short video creation, and improving user stickiness.

### SUMMARY

The present invention is as defined by the appended independent claims.

### BRIEF DESCRIPTION OF THE DRAWINGS

The accompanying drawings here are incorporated into the specification and form a part of the present specification, illustrating embodiments in accordance with the present disclosure and used together with the description to explain the principles of the present disclosure.

In order to provide a clearer explanation of the technical solutions in the embodiments of the present disclosure or the prior art, a brief introduction will be given below to the accompanying drawings required in descriptions of the embodiments or the prior art. It is obvious to those skilled in the art that other drawings can also be obtained based on these accompanying drawings without the need for creative labor.
Fig. 1 is a flowchart of a video processing method provided in some embodiments of the present disclosure.
Fig. 2 is a schematic diagram of a video playing page provided in some embodiments of the present disclosure.
Fig. 3 is a schematic diagram of a video playing page provided in other embodiments of the present disclosure.
Fig. 4 is a schematic diagram of a video playing page provided in still other embodiments of the present disclosure.
Fig. 5 is a schematic diagram of a video playing page provided in still other embodiments of the present disclosure.
Fig. 6 is a schematic diagram of a video playing page provided in still other embodiments of the present disclosure.
Fig. 7 is a schematic diagram of a video playing page provided in still other embodiments of the present disclosure.
Fig. 8 is a schematic diagram of a video editing page provided in some embodiments of the present disclosure.
Fig. 9 is a schematic diagram of structure of a video processing apparatus provided in embodiments of the present disclosure.
Fig. 10 is a schematic diagram of structure of a video processing device provided in embodiments of the present disclosure.

### DETAILED DESCRIPTION

In order for better understandings of the above objectives, features, and advantages of the present disclosure, schemes of the present disclosure will be further described below. It should be noted that, if without conflict, the embodiments of the present disclosure and features in the embodiments can be combined with each other.

Many specific details are elaborated in the following descriptions to facilitate a full understanding of the present disclosure, but the present disclosure may be implemented in other ways different from those described herein; obviously, the embodiments in the description are only a part of the embodiments in the present disclosure, rather than the entire embodiments.

At present, With a popularization of smart equipment and a development of information technology, various short video platforms have emerged, and the short video platforms continuously launch series of activities with diversified themes to attract more users to participate.

In some related technologies, detailed information of different activities is displayed on different independent activity pages. During a process of watching a short video, if a user wants to participate in a related activity, a current video playing page has to jump to an activity page corresponding to the activity to enable the user to learn details of the activity. Only based on the activity page, participation in the activity can be achieved It can be seen that a participation path of the activity is complex, leading to a poor user experience.

For this reason, the present disclosure provides a video processing method, comprising: in response to determining that a target video has been played for a preset duration, displaying a preset activity resource corresponding to the target video and a video generation control on a video playing page of the target video, wherein the target video belongs to a video information stream; and in response to a triggering operation on the video generation control, generating an activity video corresponding to the target video based on the preset activity resource. In the embodiments of the present disclosure, by displaying the activity resources and the video generation control on the video playing page of the target video, a user is enabled to trigger the generation of the activity video based on the video playing page without a need for jumping to another activity page in the case of not leaving a video playing scene, thereby simplifying an activity participation path and improving the user's experience.

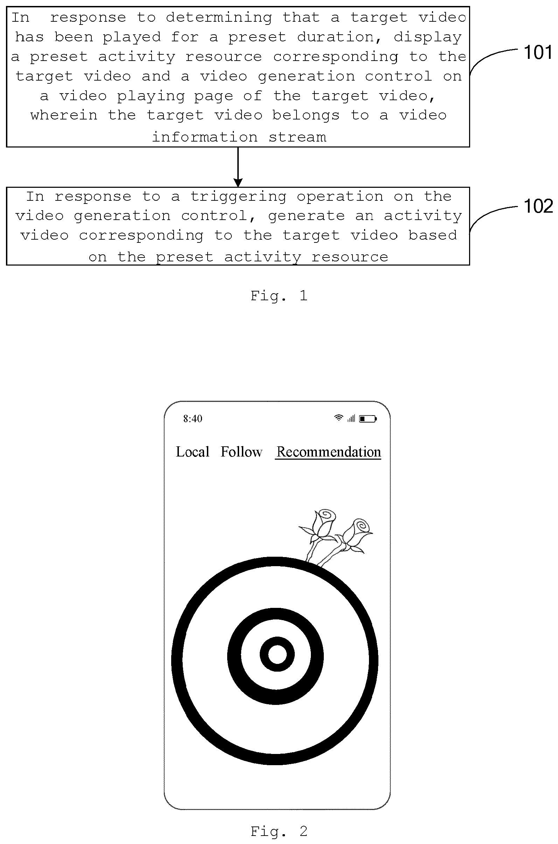

Based on this, some embodiments of the present disclosure provide a video processing method. Referring to Fig. 1, it is a flowchart of a video processing method provided in some embodiments of the present disclosure. The method comprises: steps S101 to S102.

In step S101, in response to determining that a target video has been played for a preset duration, a preset activity resource corresponding to the target video and a video generation control on a video playing page of the target video are displayed.

The target video belongs to a video information stream. The video information stream refers to an information stream that is continuously updated and presents video contents to a user. For example, on a video recommendation page, a video can be played based on a recommended video information stream. The target video can be an activity related video, for example, can be an activity promotion video, an activity introduction video, or the like.

The preset duration refers to a pre-set threshold for a playing duration of the target video. For example, the preset duration can be 5 seconds. In addition, the preset duration can also be a total duration of the target video, that is, in response to the target video being played to its end, the displaying the preset activity resource and the video generation control corresponding to the target video on the video playing page is triggered. Specifically, the preset duration can be set according to needs, and there are no restrictions on it in the present disclosure.

In some embodiments, assuming that the preset duration is 5 seconds, during a process of playing the target video on the video playing page based on the video information stream, if it is determined that the target video has been played for 5 seconds, the preset activity resource and the video generation control corresponding to the target video will be displayed on the video playing page of the target video.

The preset activity resource refers to an activity resource pre-set for an activity corresponding to the target video. For example, for Activity A, the preset activity resource can comprise a preset activity text, namely Activity A is displayed in a form of text.

It should be noted that the target video has a corresponding relationship with the preset activity resource. The preset activity resource can be pre-set based on an activity requirement corresponding to the target video. Specifically, the preset activity resources can comprise at least one of a preset activity text, a preset activity image, a preset activity audio file, a preset activity video file, or a preset activity shooting prop, and so on.

In some embodiments, in response to determining that the target video has been played for the preset duration, the preset activity resource corresponding to the target video, the video generation control and at least one information input control on the video playing page of the target video are displayed.

The at least one information input control is configured for receiving activity information inputted by a user. The activity information inputted by the user, for example, can comprise an activity greeting, activity participant information, and so on.

In some embodiments of the present disclosure, in response to determining that the target video has been played for the preset duration, the target video stops playing, and meanwhile the preset activity resource, the video generation control and the at least one information input control corresponding to the target video are displayed on the video playing page of the target video. A video screen when the target video stops playing can serve as a display background of the preset activity resource corresponding to the target video.

As shown in Fig. 2, it is a schematic diagram of a video playing page provided in some embodiments of the present disclosure. A playing screen of the target video at a time when the target video has been played for the preset duration is showed in Fig. 2. Specifically, in response to determining that the target video has been played for the preset duration, the target video stops playing and freezes in the playing screen shown in Fig. 2. The preset activity resource, the video generation control and the at least one information input control corresponding to the target video are displayed on the video playing page of the target video that displays the playing screen mentioned above, as shown in Fig. 2.

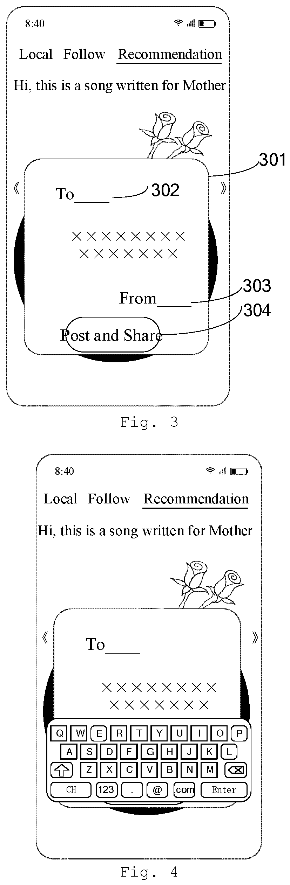

As shown in Fig. 3 which is a schematic diagram of a video playing page provided in other embodiments of the present disclosure, in response to the target video having been played for the preset duration, the preset activity resource corresponding to the target video, such as a Mother's Day blessing card 301, is displayed on the video playing page of the target video. On the blessing card is set an information input control 302, an information input control 303, and a video generation control 304. When a user clicks on the information input control 302, a keyboard pop-up window can pop up.

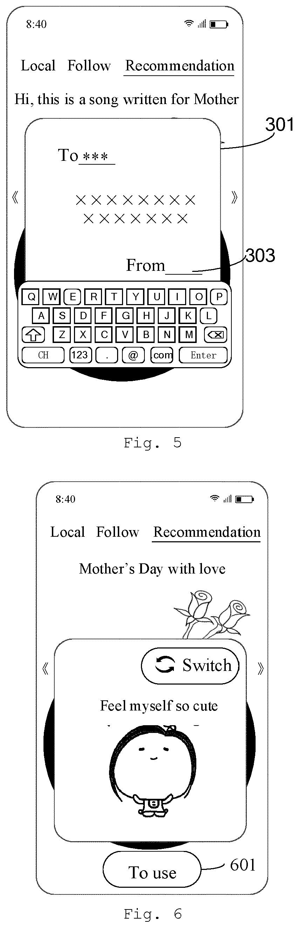

As shown in Fig. 4 which is a schematic diagram of a video playing page provided in still other embodiments of the present disclosure, a user can input activity information, and after the input is completed, the user can close the keyboard pop-up window by sliding down. In some embodiments, a display position of the Mother's Day greeting card 301 can be adjusted. As shown in Fig. 5 which is a schematic diagram of a video playing page provided in still other embodiments of the present disclosure, when a user clicks on the information input control 303, in order to show the complete Mother's Day greeting card without being blocked by the keyboard pop-up window, the Mother's Day greeting card 301 can be moved upward for display.

In some embodiments, the preset activity resource corresponding to the target video can comprise a preset activity shooting prop. In response to determining that a target video has been played for the preset duration, the preset activity shooting prop and the video generation control corresponding to the target video are displayed on the video playing page of the target video. The video generation control is configured for triggering the generation of the activity video corresponding to the target video based on the preset activity shooting prop.

In the embodiments of the present disclosure, the preset activity shooting prop can be a popular prop or a prop related to the activity.

As shown in Fig. 6 which a schematic diagram of a video playing page provided in still other embodiments of the present disclosure, in response to determining that a target video has been played for a preset duration, the preset activity shooting prop and a video generation control 601 corresponding to the target video are displayed on the video playing page. In some embodiments, a user can switch the preset activity shooting prop displayed on the video playing page by clicking on "Change".

In step S102, in response to a triggering operation on the video generation control, an activity video corresponding to the target video is generated based on the preset activity resource.

In some embodiments, in response to the triggering operation on the video generation control, a video generation template corresponding to the target video is obtained; and the preset activity resource and the activity information is added to the video generation template to generate the activity video corresponding to the target video.

In some embodiments, in response to determining that a target video has been played for a preset duration, the preset activity resource, a video generation control, and at least one information input control corresponding to the target video can be displayed on a video playing page of the target video. After receiving a triggering operation on the video generation control, a video generation template corresponding to the target video can be obtained, and the preset activity resource and activity information inputted in the at least one information input control can be added to the video generation template respectively to generate an activity video corresponding to the target video.

In some embodiments, during a process of adding the preset activity resource and the activity information inputted in the at least one information input control to the video generation template respectively, if no activity information is inputted in the at least one information input control (i.e. empty), default information corresponding to the at least one information input control can be filled into a position corresponding to the at least one information input control in the video generation template.

In some embodiments, during the process of adding the preset activity resource and the activity information inputted in the at least one information input control to the video generation template respectively, if activity information is not inputted in an information input control (i.e. empty), instead, only the activity information inputted in an information input control that is not empty and the preset activity resource will be filled into a position corresponding to the activity information and the preset activity resource in the video generation template to generate the activity video corresponding to the target video.

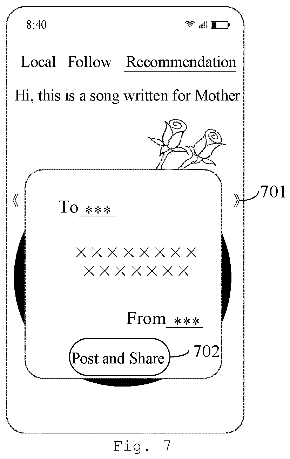

As shown in Fig. 7 which a schematic diagram of a video playing page provided in still other embodiments of the present disclosure, after receiving the activity information inputted by the user, the user can click on the video generation control 702 to trigger an acquisition of the video generation template corresponding to the target video; the preset activity resource displayed on the video playing page and the activity information inputted by the user are added to the video generation template to generate the activity video corresponding to the target video. The activity video comprises the preset activity resource and the activity information inputted by the user. As shown in Fig. 7, the generated activity video not only comprises the preset activity resource, such as a Mother's Day greeting card, but also comprises activity information * * * inputted by the user.

In some embodiments, after in response to the triggering operation on the video generation control, a jump from the video playing page to a video editing page happens and the activity video is previewed on the video editing page.

In some embodiments of the present disclosure, after receiving an operation of clicking by the user on the video generation control on the video playing page, a jump from the video playing page to the video editing page is triggered, and the activity video is previewed on the video editing page.

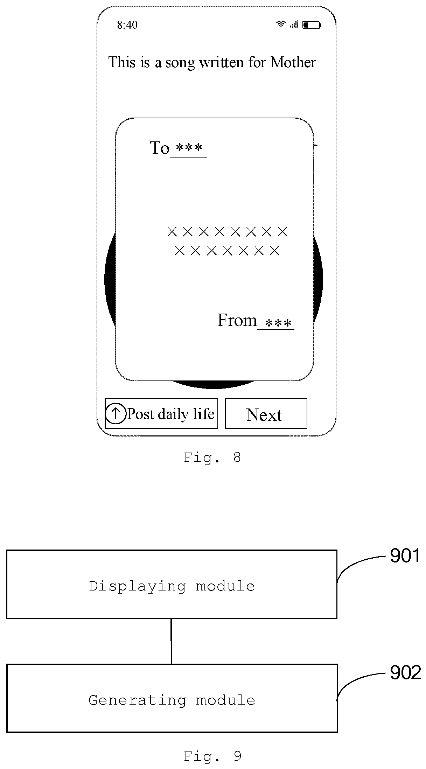

As shown in Fig. 8 which is a schematic diagram of a video editing page provided in some embodiments of the present disclosure, after generating the activity video corresponding to the target video based on the preset activity resource, the activity video is previewed on the video editing page, allowing the user to watch the activity video in advance before posting it. In some embodiments, as shown in Fig. 8, the user can trigger a post of the activity video by clicking on a button "Post daily Life". In some embodiments, as shown in Fig. 8, the user clicks on a button "Next", which can trigger further an editing operation for the activity video, such as adding a sticker, an effect, and so on.

In some embodiments, the preset activity resource may comprise a lyric of a preset activity song. After receiving the triggering operation on the video generation control, a jump from the video playing page to the video editing page happens, on which the activity video can be previewed. At the same time, the lyric of the preset activity song will be dynamically displayed in the previewed activity video.

In a practical application, the preset activity resources corresponding to the target video can comprise one or more of a preset activity text, a preset activity image, a preset activity audio file, a preset activity video file, or a preset activity shooting prop. The preset activity text refers to a text pre-set for the activity corresponding to the target video, such as a poetry fragment, a blessing, and so on. The preset activity image refers to an activity image pre-set for the activity corresponding to the target video, such as an image related to the activity corresponding to the target video. The preset activity audio file refers to an activity audio file pre-set for the activity corresponding to the target video, such as a music related to the activity corresponding to the target video. The preset activity video file refer to an activity video pre-set for the activity corresponding to the target video, such as a movie clip related to the activity corresponding to the target video. The preset activity shooting prop refers to an activity shooting prop pre-set for the activity corresponding to the target video, such as a prop related to the activity corresponding to the target video.

In some embodiments, the preset activity resource corresponding to the target video may comprise a preset activity song, as well as a lyric of the preset activity song.

When the preset activity resource corresponding to the target video is displayed on the video playing page of the target video, the preset activity song comprised in the preset activity resources can be played, the lyric of the preset activity song are displayed, and so on.

As shown in Fig. 7, after the user clicks on the video generation control 702 on the video playing page, the lyric based on the preset activity song displayed on the video playing page and the activity information inputted by the user are respectively added to positions corresponding to the lyric and the activity information in the video generation template, so as to generate the activity video corresponding to the target video, and jump from the video playing page to the video editing page.

As shown in Fig. 8, while the activity video is previewing on the video editing page, the lyric of the preset activity song comprised in the preset activity resource is dynamically displayed in the activity video that is previewing on the video editing page.

In some embodiments, the preset activity resource can also comprise a preset activity shooting prop. In response to determining that the target video has been played for the preset duration, the preset activity shooting prop and the video generation control corresponding to the target video are displayed on the video playing page of the target video; and in response to the triggering operation on the video generation control, a jump from the video playing page to a video shooting page happens, and on the video shooting page, the activity video corresponding to the target video is generated based on the preset activity shooting prop.

In some embodiments of the present disclosure, in response to determining that the target video has been played for the preset duration, the preset activity shooting prop and the video generation control corresponding to the target video are displayed on the video playing page of the target video; after receiving the triggering operation on the video generation control, the jump from the video playing page to the video shooting page happens, and on the video shooting page, on which a shooting countdown can be set, the activity video corresponding to the target video is automatically generated based on the preset activity shooting prop after the countdown is completed.

As shown in Fig. 6 which is a schematic diagram of a target video playing page provided in some embodiments of the present disclosure, the target video playing page displays the preset activity shooting prop, and the user can switch the preset activity shooting prop displayed on the video playing page by clicking on *Change.* After the user selects a preset activity shooting prop, the user can click on the video generation control 601 to trigger the jump from the video playing page to the video shooting page. Based on the preset activity shooting prop selected by the user, a video is shot, and a shooting result video is obtained on the video shooting page, which is used as the activity video corresponding to the generated target video.

In the video processing method provided in the embodiments of the present disclosure, in response to determining that a target video has been played for the preset duration, the preset activity resource and the video generation control corresponding to the target video are displayed on the video playing page of the target video, wherein the target video belongs to the video information stream; in response to the triggering operation on the video generation control, the activity video corresponding to the target video is generated based on the preset activity resource. In the embodiments of the present disclosure, by displaying the preset activity resource and video generation control on the video playing page of the target video, the user is enabled to trigger the generation of the activity video based on the video playing page without a need for jumping to another activity page in the case of not leaving the video playing scene, thereby simplifying an activity participation path and improving the user's experience.

In some embodiments of the present disclosure, if a user is not interested in the target video, a video switching can be performed based on the video information stream to which the target video belongs. Specifically, the user can trigger a first preset sliding operation on the video playing page of the target video, thereby a target switching video corresponding to the target video is obtained based on the video information stream to which the target video belongs, and playing the target switching video on the video playing page.

The first preset sliding operation can be set as needed and can comprise a sliding up operation or a sliding down operation, or the like, triggered at any position on the video playing page of the target video. There are no restrictions on it in the present disclosure.

The target switching video refers to a video in the video information stream that is in a previous or next position adjacent to the target video. The user can switch from the target video to the target switching video based on the first preset sliding operation.

In a practical application, during the process of displaying the preset activity resource corresponding to the target video on the video playing page of the target video, the user can perform a sliding up operation or a sliding down operation to trigger a video switching function based on the video information stream to which the target video belongs. It can be seen that an interaction mode of video switching is simple and efficient.

In the embodiments of the present disclosure, if the user is not interested in the target video, video switching can be performed based on the video information stream to which the target video belongs, resulting in switching to the target switching video corresponding the target video and playing it on the video playing page. As the target video is located in the video information stream, when the user is not interested in the target video, the user can switch to the target switching video in the case of not leaving the video playing scene, without affecting the user's video viewing experience.

In some embodiments of the present disclosure, the preset activity resource comprises multiple activity resource packages comprised of at least one of a preset activity text, a preset activity image, a preset activity audio file, a preset activity video file, or a preset activity shooting prop.

Specifically, in response to a second preset sliding operation acting on the video playing page of the target video, a target activity resource package is determined from the multiple activity resource packages in the preset activity resource; in response to the triggering operation on the video generation control, the activity video corresponding to the target video is generated based on the target activity resource package.

In the embodiments of the present disclosure, the second preset sliding operation can comprise a sliding left operation or a sliding right operation triggered at any position on the video playing page of the target video. Based on the second preset sliding operation, the target activity resource package is determined from the multiple activity resource packages in the preset activity resource, and is used to generate the activity video corresponding to the target video.

As shown in Fig. 7, a sliding indicator 701 is displayed on the video playing page to prompt a user to switch among the multiple activity resource packets to determine the target activity resource packet. When a triggering operation on the video generation control 702 is received, an activity video corresponding to the target video is generated based on the target activity resource package.

In some embodiments, the preset activity resource corresponding to the target video comprise multiple activity resource packages, each of which can be any one or more of the following: a preset activity text, a preset activity image, a preset activity audio file, a preset activity video file, or a preset activity shooting prop. The user can trigger a sliding left operation or a sliding right operation at any position on the video playing page of the target video to switch among multiple activity resource packages, thereby determining the target activity resource package.

In some embodiments of the present disclosure, taking a Mother's Day activity as an example, the preset activity resource corresponding to the target video can comprise multiple activity resource packages. For example, a first activity resource package, a second activity resource package, etc. The first activity resource package can comprise a Mother's Day Blessing Card A. Referring to Fig. 7, in which the target video playing page displays the Mother's Day Blessing Card A in the first activity resource package, assuming that the second activity resource package comprises a Mother's Day Blessing Card B, a switching from the first activity resource package to the second activity resource package that the user can achieve by a sliding operation, triggers the activity resource displayed on the video playing page to switch from the Mother's Day Blessing Card A to the Mother's Day Blessing Card B.

Assuming that the preset activity resource corresponding to the target video mentioned above can also comprise a third activity resource package, which comprises a Mother's Day shooting prop. The user can switch to the third activity resource package by a sliding operation, to determine the third activity resource package as the target activity resource package, and achieve an effect of displaying the Mother's Day shooting prop in the third activity resource package on the video playing page. Assuming that the third activity resource package comprises multiple Mother's Day shooting props, switching between the Mother's Day shooting props can be achieved on the video playing page based on the multiple Mother's Day shooting props in the third activity resource package.

Based on the above method, a function of selecting the target activity resource package from the multiple activity resource packages comprised in the preset activity resource corresponding to the target video can be achieved, thereby generating an activity video based on the target activity resource package.

It should be noted that the activity resources used to generate the activity video in each activity resource package can be switched according to the user's preference. For example, when the activity resource package comprises multiple preset activity audio files, a user can select a target audio file based on its preference, to generate the activity video; when the activity resource package comprises multiple preset activity shooting props, the user can select a target shooting prop based on its preference, to generate the activity video, greatly enriching the user's options and improving the user's experience.

Based on the above method embodiments, the present disclosure further provides a video processing apparatus, referring to Fig. 9, which is a schematic diagram of structure of a video processing apparatus provided in embodiments of the present disclosure. The apparatus comprises: a displaying module 901 and a generating module 902.

The displaying module 901 is configured to: in response to determining that a target video has been played for a preset duration, display a preset activity resource corresponding to the target video and a video generation control on a video playing page of the target video wherein the target video belongs to a video information stream.

The generating module 902 is configured to in response to a triggering operation on the video generation control, generate an activity video corresponding to the target video based on the preset activity resource.

In some embodiments, the displaying module is specifically configured to:
in response to determining that the target video has been played for the preset duration, display the preset activity resource corresponding to the target video, the video generation control and at least one information input control on the video playing page of the target video, wherein the at least one information input control is configured for receiving activity information inputted by a user;
correspondingly, the generating module is specifically configured to:
   in response to the triggering operation on the video generation control, generate the activity video corresponding to the target video based on the preset activity resource and the activity information.

In some embodiments, the generating module comprises:
an acquiring submodule configured to, in response to the triggering operation on the video generation control, obtain a video generation template corresponding to the target video; and
a first generating submodule configured to, add the preset activity resource and the activity information to the video generation template to generate the activity video corresponding to the target video.

In some embodiments, the apparatus further comprises:
a previewing module configured to jump from the video playing page to a video editing page and preview the activity video on the video editing page.

In some embodiments, the preset activity resource comprises a lyric of a preset activity song, and the activity video previewed on the video editing page comprises the lyric dynamically displayed.

In some embodiments, the preset activity resource comprises a preset activity shooting prop, and the generating module comprises:
a jumping submodule configured to in response to the triggering operation on the video generation control, jump from the video playing page to a video shooting page; and
a second generating submodule configured to, generate the activity video corresponding to the target video based on the preset activity shooting prop on the video shooting page.

In some embodiments, the apparatus further comprises:
an acquiring module configured to, in response to a first preset sliding operation acting on the video playing page of the target video, obtain a target switching video corresponding to the target video based on the video information stream to which the target video belongs;
a playing module configured to, play the target switching video on the video playing page.

In some embodiments, the preset activity resource comprises multiple activity resource packages comprised of at least one of a preset activity text, a preset activity image, a preset activity audio file, a preset activity video file, or a preset activity shooting prop and the apparatus further comprises:
a determining module configured to in response to a second preset sliding operation acting on the video playing page of the target video, determine a target activity resource package from the multiple activity resource packages in the preset activity resource; and
correspondingly, the generating module is specifically configured to:
   in response to the triggering operation on the video generation control, generate the activity video corresponding to the target video based on the target activity resource package.

In the video processing apparatus provided in the embodiments of the present disclosure, in response to determining that the target video has been played for the preset duration, the preset activity resource and the video generation control corresponding to the target video are displayed on a video playing page of the target video, wherein the target video belongs to the video information stream; in response to the triggering operation on the video generation control, the activity video corresponding to the target video is generated based on the preset activity resource. In the embodiments of the present disclosure, by displaying the preset activity resource and video generation control on the video playing page of the target video, the user is enabled to trigger the generation of the activity video based on the video playing page without a need for jumping to another activity page in the case of not leaving the video playing scene, thereby simplifying an activity participation path and improving the user's experience.

In addition to the aforesaid method and device, the embodiments of the present disclosure also provide a computer-readable storage medium, in which instructions are stored; when the instructions are run on a processor, the processor is enabled to implement the video processing method described in the embodiments of the present disclosure.

The embodiments of the present disclosure also provide a computer program product, comprising a computer program/instruction that implements the video processing method described in the embodiments of the present disclosure when executed by a processor.

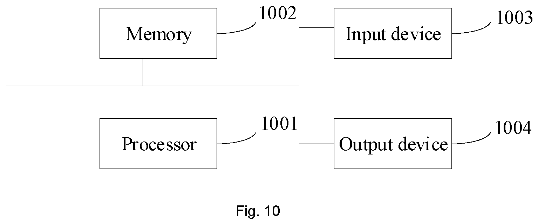

In addition, the embodiments of the present disclosure also provide a video processing device, as shown in Fig. 10, which can comprise:
a processor 1001, a memory 1002, an input device 1003, and an output device 1004. The number of the processors 1001 in the video processing device can be one or more, for example, one processor as shown in Fig. 10. In some embodiments of the present disclosure, the processor 1001, memory 1002, input device 1003, and output device 1004 can be connected via a bus or other means, wherein, a bus connection is taken as an example in Fig. 10.

The memory 1002 can be used to store software programs and modules, while the processor 1001 executes various functional applications and data processing of the video processing device by running software programs and modules stored in the memory 1002. The memory 1002 can mainly comprise a program storage area and a data storage area, wherein the program storage area can store an operating system, an application program required for at least one function, etc. In addition, the memory 1002 can comprise highspeed random access memory and can also comprise a non-volatile memory, for example, at least one disk storage device, flash memory device, or other volatile solid-state storage device. The input device 1003 can be used to receive input numerical or character information, as well as generate signal inputs related to user settings and functional control of the video processing device.

Specifically in the present embodiment, the processor 1001 will load executable files corresponding to one or more processes of application programs into the memory 1002 according to the following instructions, and run the application programs stored in the memory 1002, thereby realizing various functions of the video processing device mentioned above.

It should be noted that in the present text, relational terms such as "first" and "second", etc., are only used to distinguish one entity or operation from another entity or operation, and do not necessarily require or imply any actual relationship or order between these entities or operations. Moreover, the terms "comprise", "include", or any other variation thereof are intended to encompass nonexclusive inclusion, such that a process, method, item, or equipment that comprises a series of elements not only comprises those elements, but also comprises other elements that are not explicitly listed, or also comprises elements inherent to such process, method, item, or equipment. Without further limitations, the elements limited by the statement "comprising one..." do not exclude the existence of other identical elements in the process, method, item, or equipment that comprises the aforesaid elements.

## Claims

1. A video processing method, comprising:
in response to determining that a target video has been played for a preset duration, displaying a preset resource corresponding to the target video, a video generation control and at least one information input control on a video playing page of the target video, wherein:
the target video belongs to a video information stream (101),
the preset resource comprises at least one of a preset text, a preset image, a preset audio file, a preset video file, or a preset shooting prop; and
the at least one information input control is configured for receiving information inputted by a user;
in response to a triggering operation on the video generation control, generating a video corresponding to the target video based on the preset resource (102) and the information inputted by the user, the generating comprising:
obtaining a video generation template corresponding to the target video; and
adding the preset resource and the information inputted by the user to the video generation template to generate the video corresponding to the target video;
in response to a first preset sliding operation acting on the video playing page of the target video, obtaining a target switching video corresponding to the target video based on the video information stream to which the target video belongs; and
playing the target switching video on the video playing page.

2. The video processing method according to claim 1, further comprising, after the generating the video corresponding to the target video based on the preset resource in response to the triggering operation on the video generation control:
jumping from the video playing page to a video editing page and previewing the video on the video editing page.

3. The video processing method according to claim 2, wherein the preset resource comprises a lyric of a preset song, and the video previewed on the video editing page comprises the lyric dynamically displayed.

4. The video processing method according to any of claims 1-3, wherein the preset resource comprises a preset shooting prop, and the generating the video corresponding to the target video based on the preset resource in response to the triggering operation on the video generation control comprises:
in response to the triggering operation on the video generation control, jumping from the video playing page to a video shooting page; and
generating the video corresponding to the target video based on the preset shooting prop on the video shooting page.

5. The video processing method according to any of claims 1--4, wherein the preset resource comprises multiple resource packages comprised of at least one of a preset text, a preset image, a preset audio file, a preset video file, or a preset shooting prop, and the video processing method further comprises:
in response to a second preset sliding operation acting on the video playing page of the target video, determining a target resource package from the multiple resource packages in the preset resource; and
the generating an video corresponding to the target video based on the preset resource in response to a triggering operation on the video generation control comprising:
in response to the triggering operation on the video generation control, generating the video corresponding to the target video based on the target resource package.

6. The video processing method according to claim 5, wherein resources for generating the video within the multiple resource packages are capable of being switched with each other.

7. The video processing method according to claim 5, further comprising:
displaying a sliding indicator on the video playing page to prompt the user to switch among the multiple resource packets to determine the target resource packet.

8. A video processing apparatus, comprising:
a displaying module (901) configured to display a preset resource corresponding to a target video, a video generation control and at least one information input control on a video playing page of the target video in response to determining that the target video has been played for a preset duration, wherein:
the target video belongs to a video information stream;
the preset resource comprises at least one of a preset text, a preset image, a preset audio file, a preset video file, or a preset shooting prop; and
the at least one information input control is configured for receiving information inputted by a user;
a generating module (902) configured to generate an video corresponding to the target video based on the preset resource in response to a triggering operation on the video generation control and the information inputted by the user, wherein the generating module comprises:
an acquiring submodule configured to, in response to the triggering operation on the video generation control, obtain a video generation template corresponding to the target video, and
a first generating submodule configured to add the preset resource and the information to the video generation template to generate the video corresponding to the target video;
an acquiring module configured to, in response to a first preset sliding operation acting on the video playing page of the target video, obtain a target switching video corresponding to the target video based on the video information stream to which the target video belongs; and
a playing module configured to play the target switching video on the video playing page.

9. A computer-readable storage medium, wherein the computer-readable storage medium stores instructions, which when executed by a processor, cause the processor to implement the video processing method according any of claims 1-7.

10. A video processing device, comprising:
a memory, and
a processor,
wherein a computer program is stored on the memory and capable of running on the processor, and the computer program when executed on the processor causes the processor to implement the video processing method according any of claims 1-7.

11. A computer program product, comprising a computer program/instruction which when executed by a processor causes the processor to implement the video processing method according any of claims 1-7.

12. A computer program, comprising: instructions which when executed by a processor cause the processor to implement the video processing method according any of claims 1-7.

## Patentansprüche

1. Videoverarbeitungsverfahren, umfassend:
als Reaktion auf Bestimmen, dass ein Zielvideo für eine voreingestellte Dauer abgespielt wurde, Anzeigen einer voreingestellten Ressource, die dem Zielvideo entspricht, einer Videogenerierungssteuerung und mindestens einer Informationseingabesteuerung auf einer Videowiedergabeseite des Zielvideos, wobei:
das Zielvideo zu einem Videoinformationsstrom (101) gehört,
die voreingestellte Ressource mindestens eines von einem voreingestellten Text, einem voreingestellten Bild, einer voreingestellte Audiodatei, einer voreingestellten Videodatei oder einem voreingestellten Filmrequisit umfasst; und
die mindestens eine Informationseingabesteuerung dazu konfiguriert ist, von einem Benutzer eingegebene Informationen zu empfangen;
als Reaktion auf eine Auslösebedienung an der Videogenerierungssteuerung, Generieren eines Videos, das dem Zielvideo entspricht, basierend auf der voreingestellten Ressource (102) und den vom Benutzer eingegebenen Informationen, wobei das Generieren umfasst:
Erhalten einer Videogenerierungsvorlage, die dem Zielvideo entspricht; und
Hinzufügen der voreingestellten Ressource und der vom Benutzer eingegebenen Informationen zur Videogenerierungsvorlage, um das Video, das dem Zielvideo entspricht, zu generieren;
als Reaktion auf eine erste voreingestellte Wischbedienung, die auf der Videowiedergabeseite des Zielvideos ausgeführt wird, Erhalten eines Zielumschaltvideos, das dem Zielvideo entspricht, basierend auf dem Videoinformationsstrom, zu dem das Zielvideo gehört; und
Wiedergeben des Zielumschaltvideos auf der Videowiedergabeseite.

2. Videoverarbeitungsverfahren nach Anspruch 1, das nach dem Generieren des Videos, das dem Zielvideo entspricht, basierend auf der voreingestellten Ressource, als Reaktion auf der Auslösebedienung an der Videogenerierungssteuerung, ferner umfasst:
Springen von der Videowiedergabeseite zu einer Videobearbeitungsseite und Vorabanzeigen des Videos auf der Videobearbeitungsseite.

3. Videoverarbeitungsverfahren nach Anspruch 2, wobei die voreingestellte Ressource einen Liedtext eines voreingestellten Lieds umfasst und das auf der Videobearbeitungsseite vorab angezeigte Video den Liedtext dynamisch darstellt umfasst.

4. Videoverarbeitungsverfahren nach einem der Ansprüche 1-3, wobei die voreingestellte Ressource ein voreingestelltes Filmrequisit umfasst und das Generieren des Videos, das dem Zielvideo entspricht, basierend auf der voreingestellten Ressource, als Reaktion auf der Auslösebedienung an der Videogenerierungssteuerung, umfasst:
als Reaktion auf die Auslösebedienung an der Videogenerierungssteuerung, Springen von der Videowiedergabeseite zu einer Videoaufnahmeseite; und
Generieren des Videos, das dem Zielvideo entspricht, basierend auf dem voreingestellten Filmrequisit auf der Videoaufnahmeseite.

5. Videoverarbeitungsverfahren nach einem der Ansprüche 1-4, wobei die voreingestellte Ressource mehrere Ressourcenpakete umfasst, die jeweils eines von einem voreingestellten Text, einem voreingestellten Bild, einer voreingestellten Audiodatei, einer voreingestellten Videodatei oder einem voreingestellten Filmrequisit umfassen, und das Videoverarbeitungsverfahren ferner umfasst:
als Reaktion auf eine zweite voreingestellte Wischbedienung, die auf der Videowiedergabeseite des Zielvideos ausgeführt wird, Bestimmen eines Zielressourcenpakets aus den mehreren Ressourcenpaketen in der voreingestellten Ressource; und
das Generieren eines Videos, das dem Zielvideo entspricht, basierend auf der voreingestellten Ressource, als Reaktion auf eine Auslösebedienung an der Videogenerierungssteuerung, umfassend:
als Reaktion auf die Auslösebedienung an der Videogenerierungssteuerung, Generieren des Videos, das dem Zielvideo entspricht, basierend auf dem Zielressourcenpaket.

6. Videoverarbeitungsverfahren nach Anspruch 5, wobei Ressourcen zum Generieren des Videos innerhalb der mehreren Ressourcenpakete untereinander austauschbar sind.

7. Videoverarbeitungsverfahren nach Anspruch 5, ferner umfassend:
Anzeigen eines Wischindikators auf der Videowiedergabeseite, um den Benutzer aufzufordern, zwischen den mehreren Ressourcenpaketen zu wechseln, um das Zielressourcenpaket zu bestimmen.

8. Videoverarbeitungseinrichtung, umfassend:
ein Anzeigemodul (901), das dazu konfiguriert ist, eine voreingestellte Ressource, die einem Zielvideo entspricht, eine Videogenerierungssteuerung und mindestens eine Informationseingabesteuerung auf einer Videowiedergabeseite des Zielvideos als Reaktion auf Bestimmen anzuzeigen, dass das Zielvideo für eine voreingestellte Dauer abgespielt wurde, wobei:
das Zielvideo zu einem Videoinformationsstrom gehört;
die voreingestellte Ressource mindestens eines von einem voreingestellten Text, einem voreingestellten Bild, einer voreingestellte Audiodatei, einer voreingestellten Videodatei oder einem voreingestellten Filmrequisit umfasst; und
die mindestens eine Informationseingabesteuerung dazu konfiguriert ist, von einem Benutzer eingegebene Informationen zu empfangen;
ein Generierungsmodul (902), das dazu konfiguriert ist, ein Video, das dem Zielvideo entspricht, basierend auf der voreingestellten Ressource als Reaktion auf eine Auslösebedienung an der Videogenerierungssteuerung und den vom Benutzer eingegebenen Informationen zu generieren, wobei das Generierungsmodul umfasst:
ein Erfassungssubmodul, das dazu konfiguriert ist, als Reaktion auf die Auslösebedienung an der Videogenerierungssteuerung eine Videogenerierungsvorlage zu erhalten, die dem Zielvideo entspricht, und
ein erstes Generierungssubmodul, das dazu konfiguriert ist, die voreingestellte Ressource und die Informationen zur Videogenerierungsvorlage hinzuzufügen, um das Video, das dem Zielvideo entspricht, zu generieren;
ein Erfassungsmodul, das dazu konfiguriert ist, als Reaktion auf eine erste voreingestellte Wischbedienung, die auf der Videowiedergabeseite des Zielvideos ausgeführt wird, ein Zielumschaltvideo, das dem Zielvideo entspricht, basierend auf dem Videoinformationsstrom, zu dem das Zielvideo gehört, zu erhalten; und
ein Wiedergabemodul, das dazu konfiguriert ist, das Zielumschaltvideo auf der Videowiedergabeseite abzuspielen.

9. Computerlesbares Speichermedium, wobei das computerlesbare Speichermedium Anweisungen speichert, die, wenn sie von einem Prozessor ausgeführt werden, den Prozessor veranlassen, das Videoverarbeitungsverfahren nach einem der Ansprüche 1-7 zu implementieren.

10. Videoverarbeitungsvorrichtung, umfassend:
einen Speicher, und
einen Prozessor,
wobei ein Computerprogramm auf dem Speicher gespeichert ist und auf dem Prozessor läuft, und das Computerprogramm, wenn es auf dem Prozessor ausgeführt wird, den Prozessor veranlasst, das Videoverarbeitungsverfahren nach einem der Ansprüche 1-7 zu implementieren.

11. Computerprogrammprodukt, das ein Computerprogramm/eine Anweisung umfasst, das/die, wenn von einem Prozessor ausgeführt, den Prozessor veranlasst, das Videoverarbeitungsverfahren nach einem der Ansprüche 1-7 zu implementieren.

12. Computerprogramm, umfassend: Anweisungen, die, wenn sie von einem Prozessor ausgeführt werden, den Prozessor veranlassen, das Videoverarbeitungsverfahren nach einem der Ansprüche 1-7 zu implementieren.

## Revendications

1. Procédé de traitement vidéo, comprenant :
en réponse à la détermination qu'une vidéo cible a été lue pendant une durée prédéfinie, l'affichage d'une ressource prédéfinie correspondant à la vidéo cible, d'une commande de génération de vidéo et d'au moins une commande de saisie d'informations sur la page de lecture vidéo de la vidéo cible, dans lequel :
la vidéo cible fait partie d'un flux d'informations vidéo (101),
la ressource prédéfinie comprend au moins un élément parmi un texte prédéfini, une image prédéfinie, un fichier audio prédéfini, un fichier vidéo prédéfini ou un accessoire de prise de vue prédéfini ; et
au moins un dispositif de saisie d'informations est configuré pour recevoir des informations saisies par un utilisateur ;
en réponse à une opération de déclenchement sur la commande de génération de vidéo, la génération d'une vidéo correspondant à la vidéo cible sur la base de la ressource prédéfinie (102) et des informations saisies par l'utilisateur, la génération comprenant :
l'obtention d'un modèle de génération de vidéo correspondant à la vidéo cible ; et
l'ajout de la ressource prédéfinie et des informations saisies par l'utilisateur au modèle de génération de vidéo pour générer la vidéo correspondant à la vidéo cible ;
en réponse à une première opération de glissement prédéfinie agissant sur la page de lecture vidéo de la vidéo cible, l'obtention d'une vidéo de changement cible correspondant à la vidéo cible sur la base du flux d'informations vidéo dont fait partie la vidéo cible ; et
la lecture de la vidéo de changement cible sur la page de lecture vidéo.

2. Procédé de traitement vidéo selon la revendication 1, comprenant en outre, après la génération de la vidéo correspondant à la vidéo cible sur la base de la ressource prédéfinie en réponse à l'opération de déclenchement sur la commande de génération de vidéo :
le passage de la page de lecture vidéo à une page de montage vidéo et la prévisualisation de la vidéo sur la page de montage vidéo.

3. Procédé de traitement vidéo selon la revendication 2, dans lequel la ressource prédéfinie comprend les paroles d'une chanson prédéfinie, et la vidéo prévisualisée sur la page de montage vidéo comprend l'affichage dynamique des paroles.

4. Procédé de traitement vidéo selon l'une quelconque des revendications 1-3, dans lequel la ressource prédéfinie comprend un accessoire de prise de vue prédéfini, et la génération de la vidéo correspondant à la vidéo cible sur la base de la ressource prédéfinie en réponse à l'opération de déclenchement sur la commande de génération de vidéo comprend :
en réponse à l'opération de déclenchement sur la commande de génération de vidéo, le passage de la page de lecture vidéo à une page de prise de vue vidéo ; et
la génération de la vidéo correspondant à la vidéo cible sur la base de l'accessoire de prise de vue prédéfini sur la page de prise de vue vidéo.

5. Procédé de traitement vidéo selon l'une quelconque des revendications 1-4, dans lequel la ressource prédéfinie comprend de multiples ensembles de ressources comprenant au moins un élément parmi un texte prédéfini, une image prédéfinie, un fichier audio prédéfini, un fichier vidéo prédéfini ou un accessoire de prise de vue prédéfini, et le procédé de traitement vidéo comprend en outre :
en réponse à une seconde opération de glissement prédéfinie agissant sur la page de lecture vidéo de la vidéo cible, la détermination d'un ensemble de ressources cible parmi les multiples ensembles de ressources de la ressource prédéfinie ; et
la génération d'une vidéo correspondant à la vidéo cible sur la base de la ressource prédéfinie en réponse à une opération de déclenchement sur la commande de génération de vidéo comprenant :
en réponse à l'opération de déclenchement sur la commande de génération de vidéo, la génération de la vidéo correspondant à la vidéo cible sur la base de l'ensemble de ressources cible.

6. Procédé de traitement vidéo selon la revendication 5, dans lequel les ressources de génération de la vidéo parmi les multiples ensembles de ressources peuvent être changées entre elles.

7. Procédé de traitement vidéo selon la revendication 5, comprenant en outre :
l'affichage d'un indicateur coulissant sur la page de lecture vidéo pour inviter l'utilisateur à parcourir les différents ensembles de ressources afin de déterminer l'ensemble de ressources cible.

8. Appareil de traitement vidéo, comprenant :
un module d'affichage (901) configuré pour afficher une ressource prédéfinie correspondant à une vidéo cible, une commande de génération de vidéo et au moins une commande de saisie d'informations sur une page de lecture vidéo de la vidéo cible en réponse à la détermination que la vidéo cible a été lue pendant une durée prédéfinie, dans lequel :
la vidéo cible fait partie d'un flux d'informations vidéo ;
la ressource prédéfinie comprend au moins un élément parmi un texte prédéfini, une image prédéfinie, un fichier audio prédéfini, un fichier vidéo prédéfini ou un accessoire de prise de vue prédéfini ; et
au moins un dispositif de saisie d'informations est configuré pour recevoir des informations saisies par un utilisateur ;
un module de génération (902) configuré pour générer une vidéo correspondant à la vidéo cible sur la base de la ressource prédéfinie en réponse à une opération de déclenchement sur la commande de génération de vidéo et aux informations saisies par l'utilisateur, dans lequel le module de génération comprend :
un sous-module d'acquisition configuré pour, en réponse à l'opération de déclenchement sur la commande de génération de vidéo, obtenir un modèle de génération de vidéo correspondant à la vidéo cible, et
un premier sous-module de génération configuré pour ajouter la ressource prédéfinie et les informations au modèle de génération de vidéo afin de générer la vidéo correspondant à la vidéo cible ;
un module d'acquisition configuré pour, en réponse à une première opération de glissement prédéfinie agissant sur la page de lecture vidéo de la vidéo cible, obtenir une vidéo de changement cible correspondant à la vidéo cible sur la base du flux d'informations vidéo dont fait partie la vidéo cible ; et
un module de lecture configuré pour lire la vidéo de changement cible sur la page de lecture vidéo.

9. Support de stockage lisible par ordinateur, dans lequel le support de stockage lisible par ordinateur stocke des instructions qui, lorsqu'elles sont exécutées par un processeur, amènent le processeur à mettre en œuvre le procédé de traitement vidéo selon l'une quelconque des revendications 1-7.

10. Dispositif de traitement vidéo, comprenant :
une mémoire, et
un processeur,
dans lequel un programme informatique est stocké dans la mémoire et capable de s'exécuter sur le processeur, et le programme informatique, lorsqu'il est exécuté sur le processeur, amène le processeur à mettre en œuvre le procédé de traitement vidéo selon l'une quelconque des revendications 1-7.

11. Produit de programme d'ordinateur, comprenant un programme informatique/une instruction qui, lors de son exécution par un processeur, amène le processeur à mettre en œuvre le procédé de traitement vidéo selon l'une quelconque des revendications 1-7.

12. Programme informatique, comprenant : des instructions qui, lorsqu'elles sont exécutées par un processeur, amènent le processeur à mettre en œuvre le procédé de traitement vidéo selon l'une quelconque des revendications 1-7.
